# EUROPÄISCHE PATENTANMELDUNG

(11) **EP 0 683 291 A1**
(43) Veröffentlichungstag der Anmeldung: **22.11.1995**
(21) Anmeldenummer: 95107376.6
(22) Anmeldetag: 16.05.1995
(51) Int. Cl.: E04H 15/22, B09B 1/00

(54) **Bauwerk, insbesondere Flächentragwerk, sowie Verfahren zur Errichtung eines Bauwerks**

(30) Priorität: 21.05.1994 DE 4418007
(71) Anmelder: SL Sonderkonstruktionen und Leichtbau GmbH, D-70771 Leinfelden (DE)
(72) Erfinder: Otto, Frei, D-71229 Leonberg (DE); Rasch, Bodo, D-70771 Leinfelden-Oberaichen (DE)
(74) Vertreter: Patentanwälte Ruff, Beier, Schöndorf und Mütschele

(57) **Zusammenfassung**

Eine nach Art einer Minimalnetzfläche durch Zug-Spannkräfte gestützte Wandungsbegrenzung (4) eines Bauwerkes (1) wird gegenüber dem Baugrund (2) dadurch gegen die Spannkräfte gesichert, daß der Rand ihrer kräfteführenden Flächenlage (6) einen flächigen Zuganker (11) bildet, welcher auf dem Baugrund (2) aufliegt und mit einer aufgelegten Verankerungslast (12) reibungsschlüssig gegenüber dem Baugrund (2) festgesetzt wird. Die Begrenzung (4) wird einschließlich des Zugankers (11) zunächst flächig ausgelegt, dann der Zuganker (11) aufgebracht bzw. verankert und danach die Begrenzung (4) auf ihre für die Nutzung des Bauwerkes (1) vorgesehene Bauhöhe gebracht, wobei im Zuganker (11) auftretende Spannungsunterschiede durch Nachziehen gegenüber der Verankerung (10) selbsttätig ausgeglichen werden. Der umschlossene Raum (3) kann durch teilweise oder vollständige Verlagerung der Verankerungslast (12) verkleinert, vergrößert oder als Ganzes gegenüber dem Baugrund bewegt werden.

## Beschreibung

Die Erfindung betrifft Bauwerke mit Wandungen bzw. Begrenzungen, welche teilweise oder ganz einen begehbaren, geschützten Raum umschließen bzw. begrenzen können. Solche Begrenzungen können jeweils teilweise oder vollständig aufrechtstehend bzw. geneigt oder als Dach- bzw. Deckenwandungen vorgesehen sein. Wenigstens bei Errichten des Bauwerkes oder auch in dessen baufertigem und statisch gesichertem Gebrauchszustand ist die Begrenzung teilweise oder vollständig biegeunsteif, im wesentlichen zug- oder druckfest, in einer oder mehr Ebenen gekrümmt und gegen Wasse, Gase bzw. Luft im wesentlichen dicht, sofern nicht für deren Durchlaß gesonderte Öffnungen vorgesehen sind.

Die Begrenzung kann teilweise oder vollständig stehend nach oben oder unten gewölbt sein. Gegenüber dem Baugrund, z.B. dem natürlich gewachsenen Boden oder einem demgegenüber festeren Fundamentkörper wird die die Außenbegrenzung bildende, ein- oder mehrlagige Flächenlage vorteilhaft mit einer Zugverankerung festgelegt, welche in Richtung zur Mitte der Außenbegrenzung gerichtete und entlang der Flächenlage geleitete Zugkräfte aufnimmt. Die Wandung wird zweckmäßig durch Anheben eines Teiles oder der vollständigen Flächenlage in die fertige Bauform gesichert. Das Aufrichten kann ausschließlich oder in beliebiger Kombination durch Stützluft, mechanisch durch Druck an der Unterseite der Flächenlage angreifende Hebevorrichtungen, durch Zug an der Oberseite der Flächenlage angreifende Hebevorrichtungen oder dgl. erfolgen, wobei die Hubkraft an einem einzigen oder einer Vielzahl von Punkten angreifen kann, welche über die Fläche der Flächenlage verteilt sind.

Der Erfindung liegt auch die Aufgabe zugrunde, ein Bauwerk bzw. ein Verfahren zur Errichtung eines Bauwerkes zu schaffen, mit welchen Nachteile bekannter Ausbildungen vermieden sind und die insbesondere eine hohe Variabilität bei der Formgebung des Bauwerkes bzw. von dessen Grundriß ermöglichen.

Zur Zugverankerung eines Teiles oder einer gesamten Flächenlage kann ein flächiger Zuganker vorgesehen sein, welcher mit einer Seite durch Auflegen einer Verankerungslast zu sichern ist, so daß eine z.B. in Beton eingegossene bzw. nur durch Zerbrechen und Zerstörung wieder lösbare Verankerung nicht erforderlich ist. Der Zuganker kann unmittelbar auf dem gewachsenen Boden oder einer darauf gelegten Folie ausgelegt und danach mit der jederzeit mobilen Verankerungslast beschwert werden, so daß er gegen die parallel zu den Auflageflächen wirkenden Zugkräfte reibungsschlüssig gesichert ist. Zur Erhöhung des Reibungsschlusses sind reibungserhöhende Mittel vorteilhaft, insbesondere solche, welche verformend, in die Auflagefläche eindringen bzw. quer zur Auflageebene liegende Sperrflächen bilden, welche sich am Baugrund und an der Verankerungslast abstützen können.

Zwischen diesen Sperrflächen kann das Material der Auflageflächen in gegenseitige Berührung gelangen. Der Zuganker kann über strangförmige Zugorgane oder einen ähnlichen Zwischenabschnitt mit der Begrenzungswandung zugfest verbunden sein. Der Zuganker und/oder der Zwischenabschnitt können als Flächenlagen ausgebildet sein, welche eine oder alle der beschriebenen Eigenschaften bzw. Ausbildungen aufweisen bzw. gleich oder so ausgebildet sind, daß sie durch eine einzige, kontinuierlich durchgehende Flächenlage der genannten Art gebildet sind.

Besonders zweckmäßig ist es, wenn die flexible Flächenlage im wesentlichen über die gesamte Flächenerstreckung der Begrenzungswandung, des Zwischenabschnittes und/oder des Zugankers ein Netz, ein Gewebe oder eine andere gitterartige Struktur ist, welche rasterartig gleichmäßig verteilt mit einer Vielzahl von Durchbrüchen versehen ist, die zusammen eine Fläche einnehmen, welche größer als die Hälfte oder drei Viertel der zugehörigen Gesamtfläche der Flächenlage ist. Bei einem Gewebe kann die offene Fläche demgegenüber aber auch kleiner sein. Die Netzmaschen und Netzknoten sind zweckmäßig in der Fläche reversibel verformbar, wodurch sich die Flächenlage allen beliebigen Flächenkrümmungen anpassen kann. Insbesondere, wenn diese Flächenlage aus nichtverwobenem, sondern lediglich einander kreuzend aufeinandergelegtem Strangmaterial besteht, ist es vorteilhaft, an den Kreuzungs- bzw. Knotenstellen Knotenhalter vorzusehen, welche die zwei oder mehr kreuzenden Stränge so miteinander verbinden, daß sie unter den auftretenden Belastungen nicht oder nur bei Überbelastung schwergängig gegeneinander verschoben, sondern nur Schwenkbewegungen parallel sowie quer zur Fläche ausführen können. Knotenhalter können Spannbeschläge, genähte, genietete oder ähnliche Knotensicherungen sein. Im Falle eines Draht- oder Fasergewebes kann auf solche Knotenhalter verzichtet werden, weil die einander kreuzenden Stränge im Knoten ausreichend gegeneinander gesichert sind.

Der Baugrund bzw. die Verankerungslast sind zweckmäßig teilweise oder vollständig durch zerstörungsfrei mobiles Material gebildet, das ausschließlich oder in gegenseitiger beliebiger Kombination durch Schüttgut, Erdaushub, Kies, Wasser, Bohlen, Bausteine, gefüllte Folien-Container, gebrochenes Erz, aufgelegte Matten, Roste oder dgl. gebildet sein kann und insbesondere dann als reibungserhöhendes Mittel wirkt, wenn es sich wenigstens teilweise gegen die Sperrflächen anlegt bzw. sich nach Art einer Körnung inhärent und gegenüber dem Zuganker sperrend verzahnt. Im Falle nicht oder nur geringfügig wasserdurchlässiger Materialien sind vorteilhaft Mittel zur Entwässerung der Verankerungslast, des Regenstaus auf die Dachfläche und der Auflageflächen vorgesehen, durch welche ein Wasserstau oder ein Aufschwämmen des Materials und des Verankerungseingriffes verhindert werden können. Z.B. kann auf den Zuganker zunächst ein geschütztes Podest aufgebracht und auf dieses dann eine definiert begrenzte Verankerungslast als Beschwerung aufgelegt werden.

Soll die Flächenlage oder der umschlossene Bauwerksraum flüssigkeits- bzw. gasdicht sein, so weist die Flächenlage zweckmäßig eine entsprechende Membran, z.B. eine Folie als Flächenlage mit den genannten Eigenschaften auf. Diese Flächenlage kann als kräfteführende Flächenlage vorgesehen bzw. durch den Zuganker gesichert sein oder sie kann ohne direkte Verbindung zum Zuganker im wesentlichen nur durch eine weitere kräfteführende Flächenlage gestützt sein, an deren Innen- und/oder Außenseite sie anliegen kann. Wo erforderlich, ist die Außenbegrenzung transluzent bzw. transparent, so daß Tageslicht im wesentlichen ungehindert in den umschlossenen Raum einfallen kann. Die Außenbegrenzung kann auch als wärme- und/oder schallisolierendem Mattenmaterial oder dgl. bestehen. Dies ist insbesondere der Fall, wenn die Durchbrüche der kräfteführenden und vom Zuganker gesicherten Flächenlage mindestens 30 bis 65 oder 80, insbesondere 40 bis 55 cm Weite haben und die z.B. aus Kunststoff bestehende Membran lichtdurchlässig ist. Diese Maschenweite erlaubt auch ein gefahrloses Begehen der Begrenzungswandund nach Art einer bidimensionalen Sprossenleiter sowie den Durchstieg durch die Öffnungen durch Menschen. Ferner läßt sich die Flächenlage wegen der Griffigkeit der Netz- oder Gitterstruktur vom Boden bis zum Dachscheitel mit motorisierten Personenfahrzeugen befahren, welche durch Niederdruckreifen oder Raupen eine entsprechende Traktion gegenüber der an der Oberseite freiliegenden Struktur gewährleisten.

Der umschlossene Raum kann eine ungestützte Spannweite von 50, 100 oder 200 m haben, wobei jeder dieser Werte eine Ober- oder eine Untergrenze darstellen kann. Es eignet sich daher zur Aufnahme großer Deponien, wie Müll- und Erddeponien, sowie für Abraum- und Kohlehalden und Silos, z.B. für Getreide, also zur Lagerhaltung, wobei er durch eine oder mehrere Schleusen von außerhalb des Bauwerkes durch Menschen, Lastfahrzeuge oder dgl. zugänglich ist. Die kuppelartige Begrenzungswandung kann ausschließlich durch gegenüber dem atmosphärischen Druck höheren Fluidüberdruck gestützt sein, z.B. durch Luft, deponierte Gase, deponierte Flüssigkeit oder dgl.. Es kann aber auch innerhalb des umschlossenen Raumes ein weiterer Raum gegenüber dem Fluidraum abgedichtet umschlossen errichtet werden, z.B. durch eine selbsttragend formstabile Kuppel bzw. Schale, ein weiteres, fluidgestütztes Bauwerk oder dgl.. Ferner können in Draufsicht solche gesonderten Räume aneinander anschließen und im Bereich ihrer einander zugekehrten Randbegrenzungen durch eine gemeinsame Zugverankerung bzw. Verankerungslast gesichert sein. Der weitere Raum kann auch als Schutzraum dienen, in welchem für die Herstellung des Bauwerkes, wie des Baugrundes, des Flächentragwerkes oder auch der Deponierung erforderliche Arbeiten abgetrennt von den übrigen Räumen durchgeführt werden können.

Durch die Mobilität der Zugverankerung bzw. durch die Flexibilität der Begrenzungswandung kann jede Stelle der Raumbegrenzung in entgegengesetzten Richtungen parallel zum Baugrund und/oder quer dazu, also z.B. horizontal und vertikal, lageverändert werden. Besteht die Flächenlage aus in Richtung der Fläche aneinander schließenden Lagenabschnitten, welche voneinander lösbar sowie über Verbindungsglieder in Stoßbereichen so miteinander zu verbinden sind, daß diese Stoßbereiche im wesentlichen die gleichen Kräfte wie die übrige Flächenlage aufnehmen können, so kann die Flächenlage jederzeit an einer Randbegrenzung verkleinert oder vergrößert werden. Für den Transport sind die Lagenabschnitte zweckmäßig aufrollbar. Wird die Verankerungslast in Richtung zum Zentrum des Raumes bewegt, so wird dieser verkleinert und wird sie vom Zentrum weg bewegt, so wird der Raum vergrößert. In Draufsicht kann der umschlossene Raum dabei jede beliebige regelmäßige oder unregelmäßige Form mit konkaven und/oder konvexen Abschnitten der Randbegrenzung haben, wobei die Randbegrenzung zweckmäßig durch harmonische Linien bestimmt ist, welche mit annähernd gleicher Krümmung ineinander übergehen.

Erfindungsgemäß wird zur Errichtung des Bauwerkes ein Zuganker annähernd flächig bzw. gleichmäßig über die herzustellende Zugverankerung verteilt auf dem Baugrund lediglich durch Auflegen und im wesentlichen ohne weitere Befestigung ausgebreitet, dann gegenüber dem Baugrund reibungs- und/oder formschlüssig gegen Zug parallel zu seiner Fläche gesichert und danach erst die mit dem Zuganker verbundene Begrenzungswandung mit Hebemitteln auf ihre Bauhöhe angehoben, wobei der parallel zur Randbegrenzung im wesentlichen gleichmäßig und kontinuierlich gesicherte Zuganker dort gegenüber der Verankerung nachgeben kann, wo gegenüber benachbarten Bereichen Zugspannungsspitzen auftreten. Die Verankerungslast kann während des Anhebens stetig erhöht, entlang der Auflageflächen lageverändert oder bereits vor dem Beginn des Anhebens fertiggestellt sein. Die Bau- bzw. Scheitelhöhe des Bauwerkes ist stufenlos jederzeit mit den Hebemitteln zu verändern.

Ferner kann das Bauwerk auch als Ganzes entlang des Baugrundes wandern, indem z.B. die Verankerungslasten in Wanderrichtung gegenüber der Flächenlage im wesentlichen stufenlos verlagert werden, so daß die in Bewegungsrichtung nachfolgende Verankerungslast Lagenabschnitte zur Entfernung freigibt, während die vorauslaufende Verankerungslast den zugehörigen Zuganker oder Lagenabschnitt so freigibt, daß er nunmehr einen Teil der freiliegenden Begrenzungswandung bilden kann. Die entfernten Lagenabschnitte werden in Bewegungsrichtung vor der vorauslaufenden Verankerungslast am zugehörigen Zuganker befestigt, wonach die Verankerungslast auf sie bewegt wird. Etwa parallel zur Bewegungsrichtung sich langgestreckt erstreckende Verankerungslasten werden in ihrer Längsrichtung gleichförmig so mitbewegt, daß stets eine über den Umfang des Raumes bzw. des Bauwerkes gleichmäßig durchgehende Zugverankerung gewährleistet ist.

Die genannten Veränderungen des Bauwerkes können ohne Unterbrechung der Nutzung des umschlossenen Raumes und im Falle einer fluidgestützten Halle ohne Unterbrechung dieser Fluidstützung durchgeführt werden. Wurde in dem Raum eine tragende Aufschüttung bzw. Deponierung vorgenommen, so kann diese als Baugrund für die nachlaufende Zugverankerung bzw. als Bewegungsbasis und zur Abstützung für die nachlaufende Verankerungslast dienen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1: einen Ausschnitt eines erfindungsgemäßen Bauwerkes in vereinfachter perspektivischer Darstellung,
- Fig. 2: einen Ausschnitt eines weiteren Ausführungsbeispieles in vertikal geschnittener Perspektive,
- Fig. 3 und 4: weitere Ausführungsformen im Vertikalschnitt und
- Fig. 5 bis 9: Ausführungsbeispiele von Netzknoten.

Das Bauwerk 1 wird zur Umschließung eines Raumes 3 auf einem Baugrund 2 errichtet, welcher zunächst ein gewachsener Boden sein und über den Grundriß des Bauwerkes durch eine feuchtgehaltene Lehmschicht oder flexible Membrane gegen Sickerwasser abgedichtet sein kann. Bis auf seinen Boden ist der Raum 3 annähernd in allen übrigen Bereichen mit einer Wand-Begrenzung 4 begrenzt, welche nach Art eines Flächentragwerkes bzw. einer Minimalfläche ausschließlich auf Zug beansprucht und vom Boden ausgehend mit stetigen Krümmungen nach oben kuppelartig sowie an der Oberseite konvex und an der Unterseite konkav gekrümmt ist, wobei auch sattelförmige bzw. antiklastische Krümmungen vorkommen können, sofern der Raumboden durch eine Grube gebildet ist und die Begrenzung 4 mit Abstand über dem Raumboden an den Baugrund anschließt, kann sie auch umgekehrt nach unten gewölbt sein.

Die Begrenzung 4 ist durch eine mehrlagige Gesamt-Flächenlage 5 gebildet, deren Struktur in Ansicht und im Querschnitt über die gesamte Begrenzung 4 annähernd kontinuierlich gleich ist, nämlich an der Oberseite aus einer Armierung bzw. einem Netz 6 und an der Unterseite aus einer dichtenden Membran 7 besteht, welche unter Druck an der Unterseite der Flächenlage 6 in allen Richtungen verschiebbar und reibungsschlüssig anliegt oder an dieser in einem dem Netzraster entsprechenden Raster befestigt bzw. aufgehängt ist. Im Anschlußbereich an den Baugrund bildet die Flächenlage 5 eine Außen- bzw. Randbegrenzung 8 des Raumes 3, welche über den Umfang geschlossen durchgeht. Nach außen an die Randbegrenzung 8 anschließend bildet der Baugrund oder eine darauf angeordnete Lage eine annähernd ebene Auflagefläche 9 einer ebenfalls über den Umfang annähernd geschlossenen Zugverankerung 10, in welche alle in der Begrenzung 4 oder nur im Netz 6 wirkende Zugkräfte eingeleitet werden.

Hierzu bildet der nach außen an die Randbegrenzung 8 anschließende Bereich des Netzes 6 einen flächigen, im wesentlichen gestreckt flach und horizontal auf der Auflagefläche 9 ausgebreiteten Zuganker 11, auf dessen Oberseite eine annähernd ringförmig geschlossene Verankerungs-Last 12 aufgesetzt bzw. aufgeschüttet ist, z.B. ein Wall oder Damm aus Erde bzw. anderen Baumaterialien. Die Unterseite der Last 12 bildet eine auf der Oberseite 15 des Zugankers 11 aufliegende Auflagefläche 13, während die Unterseite 14 des Zugankers 11 auf der Auflagefläche 9 aufliegt. Dadurch ist der Zuganker 11 zwischen der Auflagefläche 9, 13 klemmend allein durch Gewichtskraft reibungsschlüssig gegen die genannten Zugkräfte gesichert, welche zum Zentrum des Raumbodens bzw. des Raumes 3 gerichtet sind. Durch Erhöhen bzw. Verringern der Last 12 kann diese Sicherungskraft annähernd stufenlos verändert werden.

Im Ausgangszustand besteht das Netz 6 aus rechtwinklig einander kreuzenden Strängen 16, 17, nämlich Längssträngen 16 und Quersträngen 17, die jeweils in gleichen Abständen parallel nebeneinander und nur auf einer Seite aller sie kreuzenden Stränge liegen. An den Kreuzungsstellen bzw. Knoten 18 sind die Stränge 16, 17 mit ihren Außenflächen unter Spannung aneinander so abgestützt, daß sie parallel zu ihren Längsrichtungen nicht gegeneinander verschoben, jedoch etwa um die Achse ihrer gegenseitigen Stützflächen gegeneinander in der Flächenlage verschwenkt werden können. Jeweils mehrere Knoten 18 und diese ringartig verbindende Strangabschnitte 16, 17 begrenzen eine gleichseitig mehreckige, z.B. drei- bis achteckige Netz-Öffnung 19, wobei alle Öffnungen 19 gleich ausgebildet oder Öffnungen unterschiedlicher Größe bzw. Ecken-Anzahl vorgesehen sein können.

Quadratische Öffnungen 19 bzw. die diese verbindenden Strangabschnitte 16, 17 können durch die Gelenkigkeit im Bereich der Knoten 18 unter den Zugkräften z. B. rauten- bzw. parallelogrammförmig oder anders verformt werden und sich dadurch an den jeweiligen Verlauf und die zugehörige Krümmung der Wölbung anpassen. Die Stränge 16, 17 können gleiche oder unterschiedliche, z.B. kreisrunde, zur Flächenlage parallel flachrechteckige oder andere Querschnitte haben und durch gedrehte Seile, geflochtene Gurte oder dgl. gebildet sein bzw. aus Stahl, Kunststoff, versponnenen Fasern oder dgl. bestehen.

Zur Erhöhung der Sicherungskraft der Zugverankerung 10 sind Mittel 20 vorgesehen, welche die auf den Zuganker 11 wirkende Reibung gegenüber derjenigen beträchtlich erhöhen, welche nur durch parallel zur Zugrichtung liegende Ankerglieder oder unnachgiebige Flächen 9, 13, 14, 15 gegeben wäre. Die jeweils quer zur Zugrichtung liegenden Strangabschnitte 16, 17 bilden mit ihren quer zu den Seiten 14, 15 liegenden Außenseiten Eingriffs-Querflächen 21, 22, welche sich an dem Material der Auflageflächen 9, 13 unter Druck gegen die Zugkräfte abstützen können, da dieses Material unter dem Lastdruck in die Öffnungen 19 so eindringt, daß in deren Bereich die Auflageflächen 9, 13 in unmittelbarer Berührung miteinander gelangen. Entsprechend dem Netzraster sind die Querflächen 21, 22 gleichmäßig rasterartig verteilt und auch eventuelle Knoten-Beschläge oder dgl. bilden solche Querflächen, so daß sich in Zugrichtung hintereinander sowie quer dazu nebeneinander zahlreiche miteinander verbundene bzw. ununterbrochen durchgehende Querflächen 21, 22 ergeben.

Der Übergang zwischen der kräfteführenden Flächenlage 6 bzw. der Randbegrenzung 8 und dem Zuganker 11 bildet eine Verbindungslage 23, welche an der Oberseite mit geringer konvexer oder konkaver Krümmung stumpf abgewinkelt in den Zuganker 11 und im davon abgekehrten Bereich mit stetiger Steigung in die übrige Flächenlage 6 übergeht. Zweckmäßig bildet die Flächenlage 6 kontinuierlich durchgehend die Verbindungslage 23 und den Zuganker 11, so daß sich hier gleiche Strukturen der Flächenlage 6 wie im Bereich der Begrenzung 4 ergeben. Die Flächenlage 6 ist aus langgestreckt streifen- oder annähernd zentrisch symmetrisch plattenförmigen, jeweils in derselben Fläche der Begrenzung 4 liegenden Lagenabschnitten 24 zusammengesetzt. Diese werden in Längsrichtung der Stränge 16 bzw. 17 aneinandergesetzt und weisen hierfür an ihren voneinander abgekehrten Rändern frei nach außen vorstehende Verbindungsglieder 25 auf, welche durch Enden der Stränge 16, 17 gebildet sein können und über den jeweils äußersten, quer zu ihnen liegenden sowie einteilig durchgehenden Strang 17 bzw. 16 vorstehen. Zur Verbindung gegeneinander gerichteter oder einander seitlich aneinanderliegend überlappender Verbindungsglieder 25 zweier aneinanderschließender Lagenabschnitte 24 dient jeweils ein Verbindungs-Beschlag 26, welcher nur die jeweiligen beiden Verbindungsglieder 25 so miteinander verbindet, daß sie die genannten Zugkräfte von einem Lagenabschnitt zum nächsten übertragen können.

Die Beschläge 26 sind insofern in dem genannten Netzraster an- geordnet, so daß jeder Strang 16 bzw. 17 eines Lagenabschnit-tes 24 nur mit einem einzigen oder mehreren entsprechenden Strängen 16, 17 des anschließenden Abschnittes 24 unmittelbar verbunden ist. Die Beschläge 26 können z.B. zerstörungsfrei befestig- und lösbare Spann- oder Klemmbeschläge, aber auch Quetschbeschläge oder Ösen sein, in welche die Verbindungsglieder 25 unter Schlaufenbildung eingehängt werden.

Die Flächenlage 7 reicht an einem oder allen Randbereichen der Begrenzung 4 bzw. der Flächenlage 5 nicht bis zur Verbindungslage 23 bzw. zur Auflagefläche 13 oder zum Zuganker 11, sondern ist zum Rauminnern mit Abstand davon unabhängig von der Flächenlage 5 und vom Zuganker 11 gegenüber der Auflagefläche 9 oder dem Raumboden mit einer zu diesem parallelen Flächenseite im wesentlichen ganzflächig festgelegt. Zu diesem Zweck ist der Rand 27 der Membran 7 nach unten und innen eingeschlagen, so daß in seinem Bereich die Membran 7 mit ihrer ansonsten die Oberfläche bildenden Lagenseite des Randes 27 streifenförmig auf dem Baugrund 9 aufliegt. Der Rand 27 kann mit einer innerhalb des Raumes 3 auf seiner Oberseite aufliegenden, ebenfalls mobilen Verankerungslast nach unten gedrückt und dadurch reibungsschlüssig gegenüber dem Boden lagegesichert sein. Zweckmäßig geht der Rand 27 über den Umfang der Randbegrenzung 8 im wesentlichen geschlossen durch, so daß er den Raum 3 nach außen abdichtet. Es kann aber auch der im Raum 3 herrschende Fluid-Überdruck ausreichen, um den Rand 27 in seine Dichtlage zu pressen.

Die gesamte Begrenzung 4 bildet ein mit seiner Struktur kontinuierlich durchgehend kuppelförmiges Dach, dessen im Zentrum oder außerhalb des Zentrums des Raumes 3 liegender, höchster Dach-Scheitel 28 wesentlich höher als die Last 12 sein kann. Mit nicht näher dargestellten Fluid-Druckquellen, wie Ventilatoren, Pumpen oder dgl., wird der Raum 3 unter Überdruck und allein dadurch die Dachfläche 4 in ihrer Form und Bauhöhe gehalten, so daß innerhalb der Randbegrenzung 8 keinerlei Abstützung erfoderlich, aber u.U. auch möglich ist (z.B. bei quasi unendlich großen Flächen). Die permeable Flächenlage 6 liegt dabei abgestützt auf der Flächenlage 7 auf und nimmt die genannten Zugkräfte auf, während die wesentlich weniger oder nichtpermeable Flächenlage 7 die Abdichtung übernimmt. Von außerhalb der und durch die Last 12 führt eine Druck-Schleuse 29 in den Raum 3, welche weit genug sein kann, um schwere Lastkraftwagen, Baumaschinen und dgl. durchzulassen. Die durch in ihrer Längsrichtung aneinandergegliederte Rohrteile gebildete Schleuse 29 kann vollständig unterhalb des Zugankers 11 bzw. der Auflageflächen 9, 13 oder teilweise bzw. vollständig darüber liegen, so daß sie dann auch die Last 12 durchsetzt und in jedem Fall wenigstens durch einen Teil der Last 12 nach unten gegen ihre Auflage belastet ist. Der Zuganker 11 und die Verbindungslage 23 können somit unter entsprechender Krümmung über die Oberseite der Schleuse 29 hinweggeführt und auf dieser abgestützt sein.

Die Schleuse 29 kann aber auch erst innerhalb der Last 12 bzw. der Auflagefläche 13 die Flächenlage 5 durchsetzen, wobei die hierfür erforderliche Öffnung zweckmäßig dadurch geschaffen wird, daß zwei benachbarte Stränge 16 bzw. 17 für die Durchführung der Schleuse 29 entsprechend wiet voneinander entfernt werden und die Öffnung durch eine entsprechend erweiterte Öffnung 19 gebildet ist. Dadurch ist zur Bildung dieser Öffnung ein Durchtrennen von Strängen 16, 17 nicht erforderlich. Die quer zur Längsrichtung der Schleuse 29 liegenden Stränge können benachbart zur Innenseite der Last 12 auf der Oberfläche der Schleuse 29 abgestützt sein, während die etwa parallel zu dieser Längsrichtung liegenden Stränge beiderseits seitlich an der Schleuse 29 anliegen.

Regen-, Schmelzwasser oder dgl. wird von der Oberseite der Begrenzung 4, ausgehend vom Scheitel 28, nach allen Seiten zur Randbegrenzung 8 bzw. zur zugehörigen Innenseite der Last 12 selbstfließend abgeleitet. Um hierbei Stauungen von Wasser zu vermeiden, sind in diesen Bereichen, in den Bereichen der Auflageflächen 9, 13 sowie darunter im Baugrund und/oder darüber in der Last 12 Drainage- bzw. Entwässerungs-Mittel 30 vorgesehen. Diese können z.B. durch wasserdurchlässige Schüttungen gebildet sein, welche das Wasser parallel und quer zum Baugrund an die vom Raum 3 abgekehrte Außenseite der Last 12 leiten.

Zur Abdichtung des Baugrundes gegen Sickerstoffe kann eine sich über den gesamten Grundriß der Last 12 und des Raumes 3 sich erstreckende Bodenmembran 31 oder eine Lehmschicht auf den Baugrund gelegt sein, welche unmittelbar die Auflagefläche 9 bildet oder auf die eine die Auflagefläche 9 bildende Schicht geschüttet ist. An diese Membran 31 kann auch der Rand 27 unmittelbar anschließen und mit ihr ggf. verklebt oder verschweißt sein. Der Raumboden kann durch eine entsprechend ausgelegte Membran 32 abgedichtet sein, welche ebenfalls dicht an den Rand 27 anschließt und zweckmäßig mit ihrem Rand entweder lose auf der Oberseite des Randes 27 aufliegt oder an diesem in der beschriebenen Weise befestigt ist. Auch der Rand 27 kann nur lose, d.h. zerstörungsfrei abhebbar, auf der Auflagefläche 9 aufliegen. Auch zwischen der Auflagefläche 13 und der Oberseite 15 könnte eine Membran 33 zur Abdichtung vorgesehen sein, so daß Wasser unter Umgehung des trockenliegenden Zugankers 11 abgeleitet werden kann.

Im Abstand unterhalb des Raumbodens kann eine weitere Membran 34 entsprechend ausgelegt sein, auf welche eine Drainageschicht 30 geschüttet ist, welche ihrerseits an der Oberseite mit der Membran 31 abgedeckt ist. In dieser Drainageschicht 30 können rohrförmige Kontrollgänge 35 verlegt sein, welche gegenüber der Drainageschicht 30 abgedichtet und für Menschen begehbar sind, um Undichtigkeiten oder dgl. zu prüfen.

Wird im Raum 3 auf dem Raumboden eine Feststoff-Deponierung 36 von einer Raumseite ausgehend zur gegenüberliegenden fortschreitend aufgeschüttet, so kann deren Oberseite ebenfalls mit einer Membran 37 abgedeckt werden, die dann hinsichtlich des zugehörigen Randes 27 die beschriebene Funktion der Membran 31 übernimmt, also an die Unterseite des Randes 27 dicht anschließt.

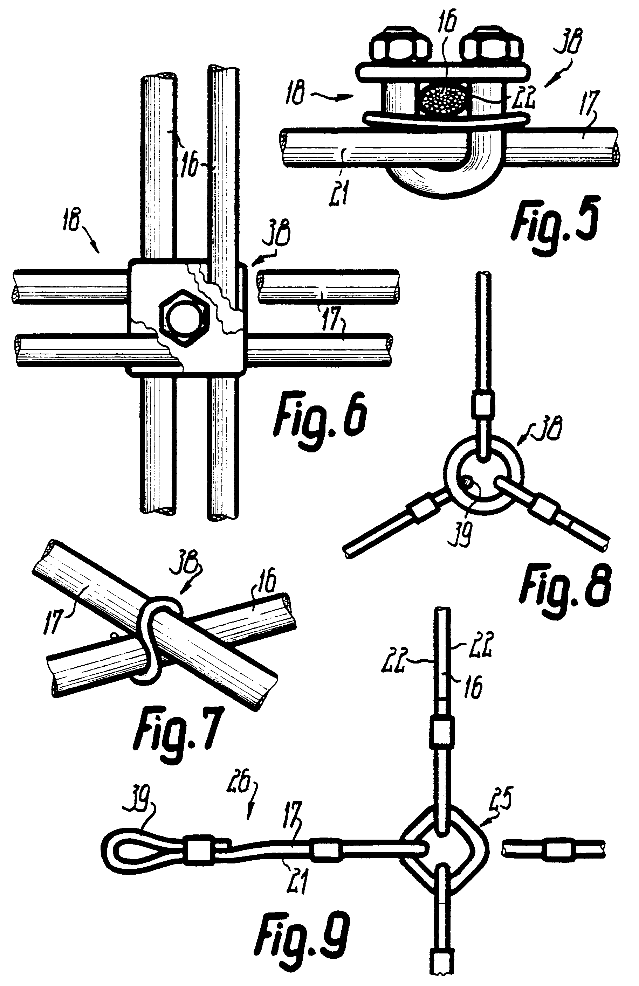

Gemäß Fig. 5 ist ein Knotenbeschlag 38 durch eine U-förmige Klemme oder einen Schäkel gebildet, zwischen dessen parallele Schenkel die beiden einander kreuzenden Stränge 16, 17 so eingreifen, daß zwischen ihren aneinander abgestützten Flächen ein plattenförmiges Zwischenglied liegt. Mit auf den Klemmen-schenkeln bzw. Gewindebolzen geführten Muttern werden dann über ein plattenförmiges Spannglied die Stränge 16, 17 unter Zwischenlage des Zwischengliedes gegen den Klemmen-Quersteg und gegeneinander verspannt, wobei die Spannkraft jederzeit stufenlos veränderbar ist. Gemäß Fig. 6 bilden jeweils zwei oder mehr auf Lücke unmittelbar benachbart zueinander liegende, parallele Stränge 16 und 17 einen einzigen Knoten 18 mit einem einzigen Beschlag 38, so daß zusätzlich zu den Öffnungen 19 zwischen benachbarten Strängen 16 bzw. 17 nochmals langgestreckte Öffnungen gebildet sind. Der Beschlag 38 weist vier Spannplatten auf, von denen die beiden mittleren dem Zwischenglied gemäß Fig. 5 entsprechen, aneinander gleitend drehbar sind und von einer zentralen Spannschraube gemeinsam durchsetzt sind, welche die durch die eng benachbarten Stränge 16, 17 begrenzte Öffnung durchsetzt. Gemäß Fig. 7 ist der Be-schlag 38 durch einen einteiligen Bauteil gebildet, welcher zwei hakenförmig offene, in zueinander rechtwinkligen Ebenen liegende und im Bereich eines Schenkels ineinander übergehende Bügel bildet, von denen jeder in einen der beiden einander kreuzenden Stränge 16, 17 mit Spannung einzuhängen ist. Für die Knoten können auch sogenannte Verpreßverschläge verwendet werden.

Gemäß Fig. 8 ist der Beschlag 38 im wesentlichen durch einen kreisförmigen Ring gebildet, in welchen drei im Ausgangszustand gleichmäßig über den Umfang verteilte Strangabschnitte mit geschlossenen Schlaufen eingehängt sind, die durch Spann- oder Quetschbeschläge außerhalb des Ringes gesichert sind. Dadurch werden z.B. regelmäßig sechseckige Netzmaschen bzw. Netzöffnungen gebildet, und die Strangabschnitte bilden gleichzeitig die Verbindungsglieder 25 bzw. Beschläge 26, wie z.B. anhand von Fig. 9 erkennbar ist. Gemäß dieser Ausbildung kann auch der z.B. rechteckige oder quadratische Ring als Verbindungsglied 25 aufgefaßt werden, wobei hier in den Ring 25 vier gleichmäßig über den Umfang verteilte Strangabschnitte 16, 17 eingreifen, welche jeweils an beiden Enden Schlaufen 39 aufweisen. Für den Eingriff der Schlaufen 39 bildet der Ring 25 am Innenumfang durch seine Ecken einspringend begrenzte und etwa rechtwinklig flankierte Aufnahmen, so daß er gegenüber den eingreifenden Schlaufen im Gegensatz zur Ausbildung nach Fig. 8 um seine Ringachse verdrehgesichert ist. Der Ring kann auch als Schäkel durch Unterbrechung zum Ein- und Ausführen der Schlaufen 39 oder dgl. offen und mit einem Schließglied, z.B. einer Gewindehülse, verschließbar sein.

Um die Last 12 ab- und aufzubauen bzw. kontinuierlich in einer Bewegungs- oder Wanderrichtung 44 zu verlagern, sind Fördermittel 40 vorgesehen. Bei der angenommenen Wanderrichtung 44, die auch in jeder beliebigen anderen Richtung liegen kann, werden die quer zur Wanderrichtung 44 und parallel zum zugehörigen Abschnitt der Randbegrenzung 8 liegenden Längsabschnitte der Last 12 quer zur ihrer Längsrichtung verlagert. Wird nur der in Wanderrichtung 44 hintere Abschnitt verlagert und dabei die Begrenzung 4 auf den Baugrund niedergedrückt, so wird der Raum 3 verkleinert. Wird nur der in Wanderrichtung 44 vorausliegende Querabschnitt der Last 12 von der Begrenzung 4 weg verlagert, so wird der Raum 3 vergrößert. Im ersten Fall bilden Abschnitte der Flächenlage 5, die zuvor zur Begrenzung 4 gehört haben, nunmehr den Zuganker 11 bzw. die zugehörige Verbindungslage 23, und im zweiten Fall werden diese beiden Teile 11, 23 zu Flächenlagen 5 der Begrenzung 4. Werden beide Querabschnitte der Last 12 verlagert, so bleibt die Größe des Raumes 3 etwa gleich, jedoch wird der gesamte Raum 3 in Wanderrichtung 44 gegenüber dem Baugrund 2 verlagert.

Parallel zur Wanderrichtung 44 liegende Längsabschnitte der Last 12 werden gleichzeitig in ihrer Längsrichtung mit verkürzt, verlängert oder als ganzes verlagert, so daß die geschlossene Ringform der Last 12 ständig im wesentlichen erhalten bleibt. Die Fördermittel 40 können Erdbewegungsmaschinen bzw. Förderer 41, 42 aufweisen, welche die Last 12 an der in Wanderrichtung 44 hinteren Böschungsseite abtragen und über die Krone 43 auf die in Wanderrichtung 44 vordere Böschungsseite schütten. Sind die Förderer 41, 42 umlaufende Schaufelförderer, so können sie parallel zum zugehörigen Abschnitt der Last 12 während des Arbeitens hin und her verfahrbar sein, so daß dieser Abschnitt nach und nach fortschreitend über seine gesamte Länge im wesentlichen gleichmäßig verlagert wird. Entsprechende Förderer sind auch für die zur Wanderrichtung 44 parallelen Längsabschnitte und für die abgerundetet Eckbereiche der Last 12 vorgesehen. Die Dammkrone 43 kann als Fahrpiste für Baumaschinen vorgesehen sein.

Durch die Verlagerung des in Wanderrichtung 44 hinteren Quer-abschnittes der Last 12 wird der zugehörige Zuganker 11 freigelegt, so daß dessen Lagenabschnitte 24 nach Lösen der Beschläge 26 entfernt werden können. Die Lagenabschnitte 24 können dann an der Vorderseite des in Wanderrichtung 44 vorderen Last-Querabschnittes an den dortigen Rand der Flächenlage 5 wieder mit Beschlägen 26 angefügt werden. Liegt die Schleuse 29 im Bereich eines zur Wanderrichtung 44 etwa parallelen Lastabschnittes, so muß sie eventuell in Wanderrichtung 44 versetzt werden, wenn der nachlaufende Last-Querabschnitt sie erreicht. Die Schleuse 29 kann aber auch im Bereich eines zur Wanderrichtung 44 querliegenden Lastabschnittes liegen, so daß sie durch Verlängerung an einem und Verkürzung am anderen Ende der Wanderbewegung nachfolgen kann, insbesondere wenn sie durch in Längsrichtung aneinanderzufügende Rohrabschnitte gebildet ist.

Bei der Wanderbewegung des nachlaufenden Last-Querabschnittes kann der Rand 27 auch über die Anfangsböschung bzw. Oberseite der Deponierung 26 wandern, auf welcher auch der Zuganker 11 bzw. der zugehörige Last-Querabschnitt abgestützt werden kann. Der Raum 3 kann daher jeweils um diejenigen Raumteile verkleinert werden, welche bereits in der gewünschten Höhe mit der Deponierung 36 gefüllt sind.

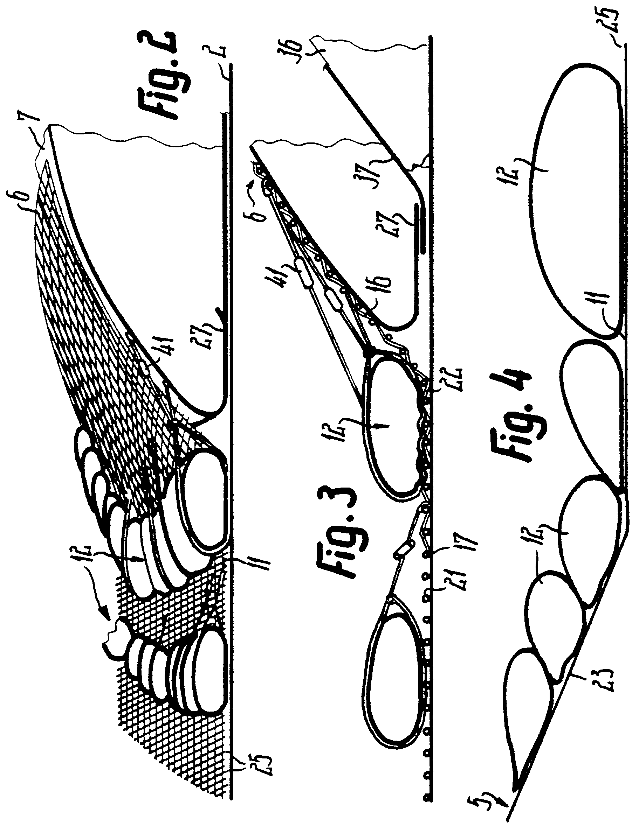

Gemäß Fig. 2 ist die Last 12 durch flexible und mit einem fließfähigen Lastmaterial, z.B. Wasser, Bentonit oder dgl., gefüllte Container gebildet, welche in einer oder mehreren Reihen hintereinander auf dem Zuganker 11 liegen können. Diese Container können mit Seilzügen, Flaschenzügen oder ähnlichen Fördermitteln 41 verlagert werden, wobei das Widerlager für die Verlagerungskraft durch die Flächenlage 6 gebildet sein kann. Die Seilzüge können mit Haken oder ähnlichen Beschlägen in Strangabschnitte 16, 17 der Flächenlage 6 zur Bildung der Widerlager so eingehängt werden, daß sie jederzeit zerstörungsfrei wieder lösbar und in andere Bereiche der Flächenlage 6 umsetzbar sind. Eine ähnliche Ausbildung zeigt auch Fig. 3, wobei hier die Deponierung 36 erkennbar und die Flächenlage 6 durch verwobene Stränge 16, 17 gebildet ist.

Gemäß Fig. 4 liegen die Last-Container 12 benachbarter Reihen schuppungsartig aufeinander, wobei sie auch auf der schräg oder höchstens unter 45m ansteigenden Verbindungslage 23 aufliegen können.

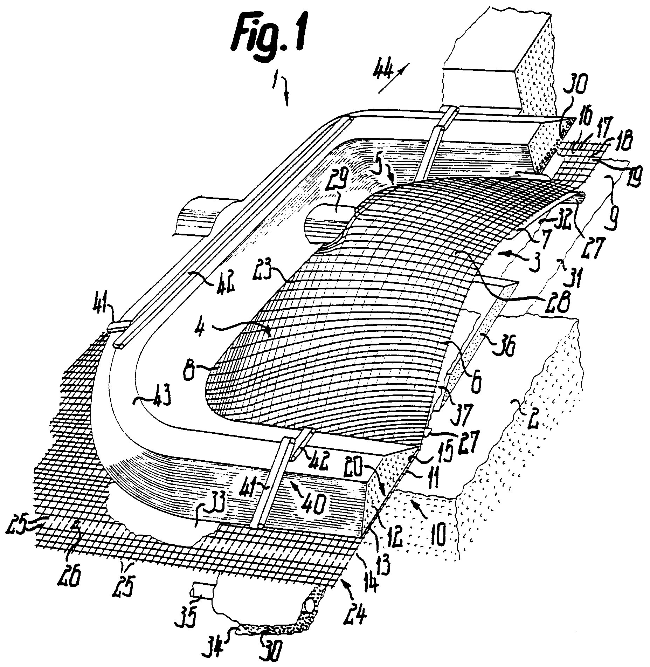

Die Membran 7 kann auch als über den Raumboden geschlossen durchgehende Hülle ausgebildet sein, so daß sie die Wanderbewegung in einer Art Walk- und Rollbewegung mitmacht. Bei der Ausbildung nach Fig. 1 wird auch die Membran 7 am in Wanderrichtung 44 nachlaufenden Ende durch Abtrennen verkürzt und am vorauslaufenden Ende durch Anfügen von gleichartigen Lagenab-schnitten verlängert. Die Dachhaut bzw. Flächenlage 5 oder 7 kann, z.B. zur Wärme- und/oder Schallisolierung, auch nach Art einer Kissenfolie so ausgebildet sein, daß sie entsprechend dem Maschenraster eines Netzes mit geschlossenen Luftkammern versehen ist. Ferner kann an der tragenden Dachhaut 5 eine weitere, im Raum 3 einen Raumteil abgrenzende Arbeitshalle oder dgl. aufgehängt werden, welche gegenüber den übrigen, zur Deponierung vorgesehenen Raumteilen abgedichtet ist und ebenfalls mitwandert bzw. verkleinert oder vergrößert werden kann.

Wird innerhalb des Raumes 3 und allseits mit Abstand von der Begrenzung 4 ein kleinerer Raum durch eine Wandung, z.B. eine auf dem Raumboden mit ihrem Rand stehende Festschale, abgedichtet abgetrennt, so kann der Rand 27 an die Oberseite dieser Wandung anschließen, und der Überdruck zur Stützung der Flächenlage 5 ist nur zwischen der Oberseite dieser Festschale und der Begrenzung 4 erforderlich. In diesem Fall kann in dem abgetrennten kleineren Raum atmosphärischer Druck herrschen, und es ist keine Druckschleuse für den Zugang zu diesem abgetrennten Raum erforderlich, da dessen Wandung außerhalb des Druckraumes für den Zugang durchbrochen sein kann.

Begrenzungen 4 für zwei gesonderte und benachbarte Räume 3 können auch beiderseits eines oder mehrerer Abschnitte der Last 12 vorgesehen sein, wobei dann die Flächenlage 6 über beide Begrenzungen 4 ununterbrochen durchgehen und für beide Begrenzungen 4 einen gemeinsamen zugehörigen Abschnitt des Zugankers 11 bilden kann. Dadurch ist zur Bildung zweier Innenräume nur eine einzige, zwischen diesen liegende Verankerungslast 12 erforderlich. Beide Räume können gleichzeitig in der beschriebenen Weise wandern bzw. kann der eine Raum vergrößert und dadurch gleichzeitig der andere Raum verkleinert werden. Ferner kann die Begrenzung 4 an jeder beliebigen Stelle durch Niederdrücken gegen und an den Baugrund mit einer Verankerungslast unter Bildung eines Zugankers über die Spannweite linienförmig ode allseitig im Abstand von der Randbe-grenzung punktförmig eingeschnürt und dadurch ein Raum 3 in zwei oder mehr gesonderte Teilräume bzw. einen Ringraum unterteilt werden. Der jeweilige Abschnitt des Zugankers 11 kann auch durch quer in den Baugrund getriebene Erdnägel oder dgl. zusätzlich gegen Verschiebungen gesichert werden. Ferner kann an jeder Stelle der Dachhaut ein Stabilisierungsgewicht aufgehängt werden, das ggf. auf dem Raumboden ruht, jedoch die Dachhaut an seinem Befestigungspunkt eindellend nach unten zieht.

Der Raum 3 ist sehr gut zur Deponierung bzw. Entsorgung giftiger Feststoffe, Flüssigkeiten und/oder Gase geeignet. Sind diese deponiert und durch Abdeckung ausreichend dicht umschlossen, so kann das Bauwerk abgebaut oder über sie hinweg bewegt werden, wonach die Deponie auf der Dichtmembran 37 durch Bepflanzung begrünt werden kann.

Alle beschriebenen Anordnungen und Ausbildungen können in beliebiger Kombination bei ein und demselben Bauwerk vorgesehen sein. Die erläuterten Eigenschaften und Wirkungen können jeweils genau wie beschrieben, nur etwa wie beschrieben oder auch stark davon abweichend vorgesehen sein, je nachdem, welche Erfordernisse an das Bauwerk zu stellen sind.

Erfindungsgemäß wird eine nach Art einer Minimalfläche bzw. Minimalnetzfläche überall gleich hohe Zug-Spannkräfte gestützte Wandungsbegrenzungen (4) eines Bauwerkes (1) gegenüber dem Baugrund (2) dadurch gegen die Spannkräfte gesichert, daß der Rand ihrer kräfteführenden Flächenlage (6) einen flächigen Zuganker (11) bildet, welcher auf dem Baugrund (2) aufliegt und mit einer aufgelegten Verankerungslast (12) reibungsschlüssig gegenüber dem Baugrund (2) festgesetzt wird. Die Begrenzung (4) wird einschließlich des Zugankers (11) zunächst flächig ausgelegt, dann der Zuganker (11) verankert und danach die Begrenzung (4) auf ihre für die Nutzung des Bauwerkes (1) vorgesehene Bauhöhe gebracht, wobei im Zuganker (11) auftretende Spannungsunterschiede durch Nachziehen gegenüber der Verankerung (10) selbsttätig ausgeglichen werden. Der umschlossene Raum (3) kann durch teilweise oder vollständige Verlagerung der Verankerungslast (12) verkleinert, vergrößert oder als ganzes gegenüber dem Baugrund bewegt werden.

## Patentansprüche

1. Bauwerk, insbesondere Flächentragwerk, wie fluidgetragene Halle, dadurch gekennzeichnet, daß sie zur wenigstens teilweisen Umschließung mindestens eines Innenraumes (3) auf einem Baugrund (2) oder dgl. vorgesehen und/oder mit wenigstens einer eine Außenbegrenzung (4), wie eine Dach-Wandung (4), bildenden Flächenlage (5) vorgesehen ist.

2. Bauwerk nach Anspruch 1, dadurch gekennzeichnet, daß es bzw. die Flächenlage (5) mit mindestens einer Zugverankerung (10) am Baugrund (2) gegenüber Auflageflächen (9, 13) zu verankern ist und in Draufsicht eine Randbegrenzung (8) des Raumes (3) bildet, daß insbesondere eine Zugverankerung (10) mindestens einen mit einer Unterseite (14) auf einer Auflagefläche (9) des Baugrundes (2) auszulegenden und mit einer eine Auflagefläche (13) bildenden Verankerungslast (12) zu sichernden Zuganker (11) aufweist und daß vorzugsweise ein Zuganker (11) sich als Flächenlage entlang des größten Teiles der Randbegrenzung (8) erstreckt bzw. zusätzliche, reibungserhöhende Mittel (20) zur im wesentlichen reibungsschlüssigen Verankerung eines Zugankers (11) gegenüber mindestens einer der Auflageflächen (9, 13) vorgesehen sind.

3. Bauwerk nach Anspruch 1 oder 2, dadurch gekennzeichnet, daß ein Zuganker (11) über eine flächige Verbindungslage (23) mit einer Begrenzung (4) verbunden ist, daß insbesondere eine Flächenlage (5) im wesentlichen einheitlich über einen Zuganker (11) und eine Begrenzung (4) durchgeht und daß vorzugsweise ein Zuganker (11) an wenigstens einer Flächenseite (14, 15) mit quer zu seiner Ebene liegenden Eingriffsflächen (21, 22), wie Durchbrüchen (19), Vertiefungen, Vorsprüngen (38) oder dgl., zum eingebettet versenkten Eingriff mit mindestens einer der Auflageflächen (9, 13) versehen ist.

4. Bauwerk nach einem der vorhergehenden Ansprüche, dadurch gekennzeichnet, daß eine flexible Flächenlage (5) als Armierungsfläche ein Netz (6) mit in ihrer Fläche verformbaren Netzmaschen und Netzknoten (18) und/oder eine Membran (7) aufweist, daß insbesondere eine Flächenlage (5) von einem Zuganker (11) schräg ansteigend zu einem Dachscheitel (28) verläuft und daß vorzugsweise an mindestens einer Flächenseite (14, 15) eines Zugankers (11) eine im wesentlichen gegenüber der jeweiligen Auflagefläche (9, 13) abdichtende Membran (31, 33) oder dgl. vorgesehen ist, und/oder daß eine Flächenlage (6) im wesentlichen durch mindestens ein Strangmaterial (16, 17), wie Seile bzw. Gurte aus Stahl, Kunststoff oder dgl., gebildet ist, daß insbesondere Strangmaterial (16, 17) an Netzknoten (18) mit gesonderten Knotenhaltern (38) in seiner Längsrichtung schwer verschiebbar, jedoch um die Knotenachse relativ beweglich gesichert ist und daß vorzugsweise zur Vergrößerung bzw. Verkleinerung einer Flächenlage (5, 6) Lagenabschnitte (24) am Rand frei vorstehende Verbindungsglieder (25) zur Verbindung mit anschließenden Lagenabschnitten (24) aufweisen.

5. Bauwerk nach einem der vorhergehenden Ansprüche, dadurch gekennzeichnet, daß mindestens eine Auflagefläche (9, 13) bzw. Verankerungslast (12) durch ein im wesentlichen zerstörungsfrei und unter Überwindung einer inneren Reibung mobiles Material, wie Schüttgut, Erdaushub, Kies, Wasser, Bohlen, Bausteine, mindestens einen gefüllten flexiblen Foliencontainer oder dgl. gebildet ist, daß insbesondere eine Verankerungslast (12) wall- bzw. dammartig im wesentlichen ununterbrochen entlang der Randbegrenzung (8) anzuordnen und Entwässerungsmitteln (30) sowie Transportwegen (29) zum Raum (3) zugeordnet ist und daß vorzugsweise Fördermittel (40) zur im wesentlichen stufenlosen Verlagerung einer Verankerungslast (12) etwa quer und/oder parallel zur Randbegrenzung (8) vorgesehen sind.

6. Bauwerk nach einem der vorhergehenden Ansprüche, dadurch gekennzeichnet, daß mindestens eine einen Raum (3) wenigstens teilweise gegen Wasser, Luft oder dgl. abdichtende, als Dichtlage (7) vorgesehene flexible Flächenlage gegenüber einem Zuganker (11) zum Rauminnern versetzt endet, daß insbesondere eine Dichtlage (7) an der Innenseite einer Armierungslage (6) liegend wenigstens einen einwärts geschlagenen, auf mindestens einer Bodenmembran (31) flächig aufliegenden Dichtrand (27) aufweist und daß vorzugsweise ein Dichtrand (27) im wesentlichen ununterbrochen über den Umfang einer Randbegrenzung (8) geschlossen durchgehend angeordnet bzw. durch Fluid-Überdruck oder dgl. zur Dichtlage belastet ist.

7. Bauwerk nach einem der vorhergehenden Ansprüche, dadurch gekennzeichnet, daß ein Raum (3) zur Aufschüttung einer Deponierung (36) ausgebildet und/oder im wesentlichen jeder Abschnitt einer Randbegrenzung (8) eines Raumes (3) in jeder beliebigen Richtung (44) entlang des Baugrundes (2) bzw. der Oberseite der Aufschüttung (36) lageveränderbar ist, daß insbesondere unterhalb der Oberseite (43) eine eine Verankerungslast (12) passierende Druckschleuse (29) für Versorgungsverkehr vorgesehen ist und daß vorzugsweise eine im wesentlichen ausschließlich auf Zug beanspruchte Begrenzung (4) im wesentlichen über die gesamte Spannweite eines Raumes (3) kuppelartig gekrümmt ausschließlich von tragender Luft gestützt sowie gegen die in ihr formgebend wirkenden Zugkräfte annähernd ausschließlich und zugausgleichend nachgiebig durch eine Verankerungslast (12) gesichert ist.

8. Verfahren zur Errichtung eines Bauwerkes (1), insbesondere eines Flächentragwerkes, wie einer fluidgestützten Halle, bzw. eines Bauwerkes (1) nach einem der vorhergehenden Ansprüche, dadurch gekennzeichnet, daß es zur wenigstens teilweisen Umschließung mindestens eines Innenraumes (3) auf einem Baugrund (2) oder dgl. aufgerichtet und/oder mit einer eine Raum-Außenbegrenzung (4), wie eine Dachbegrenzung, begrenzenden Flächenlage (5) versehen wird.

9. Verfahren nach Anspruch 8, dadurch gekennzeichnet, daß eine Flächenlage (5) mit einer Zugverankerung (10) am Baugrund (2) gegenüber Auflageflächen (9, 13) verankert wird und in Draufsicht eine Randbegrenzung (8) des Raumes (3) bildet, daß insbesondere ein Zuganker (11) der Zugverankerung (10), vorzugsweise einschließlich einer Begrenzung (4), annähernd flächig ausgelegt auf dem Baugrund (2) ausgebreitet, dann ein Zuganker (11) gegenüber dem Baugrund (2) wenigstens reibungsschlüssig gegen Zug gesichert und danach eine mit einem Zuganker (11) verbundene Begrenzung (4) mit Hebemitteln auf ihre Bauhöhe gebracht wird, und/oder daß eine Begrenzung (4) über ihren gesamten Umfang im wesentlichen gleichmäßig durch Auflegen einer Verankerungslast (12) auf ihren Rand (11) gesichert wird, daß insbesondere beim erst darauffolgenden Anheben, Versetzen bzw. Verschieben einer Begrenzung (4) und der nur dadurch bewirkten stetig zunehmenden Zugbelastung einer Zugverankerung (10) von der Begrenzung (4) in einen Zuganker (11) eingeleitete Spannungsunterschiede durch Nachziehen zugehöriger Abschnitte eines Zugankers (11) gegen Reibungskräfte einer Zugverankerung (10) ausgeglichen werden und daß vorzugsweise das Anheben durch wenigstens teilweise gleichmäßig verteilten Druck gegen die Innenseite einer Begrenzung (4) vorgenommen wird.

10. Verfahren nach Anspruch 8 oder 9, dadurch gekennzeichnet, daß zur Änderung der Form, Lage und/oder Höhe eines Raumes (3) eine Zugverankerung (10) an wenigstens einer Seite einer Randbegrenzung (8) entlang des Baugrundes (2) bzw. einer Aufschüttung (36) im Raum (3) bewegt wird, daß insbesondere im wesentlichen unter Aufrechterhaltung der vorbestimmten Bauhöhe einer Begrenzung (4) an der vom Raum (3) abgekehrten Seite einer Zugverankerung (10) eine Flächenlage (6) freigelegt sowie an der in Bewegungsrichtung (44) nachfolgenden Seite einer Zugverankerung (10) und des Raumes (3) in Lagenabschnitten (24) gelöst bzw. an der in Bewegungsrichtung (44) vorauslaufenden Seite durch Anfügen von Lagenabschnitten (24) vergrößert wird und daß vorzugsweise in dem Raum (3) entlang des Baugrundes (2) eine Aufschüttung (36) mit einer vorgegebenen Höhe der Oberseite von einer Anfangsböschung in einer Wachstumsrichtung (44) voranschreitend vorgenommen sowie eine nachlaufende Zugverankerung (10) entlang der Anfangsböschung, der Oberseite und/oder einer Endböschung entsprechend dem Fortschritt der Aufschüttung (36) nachbewegt wird.
